# FASCICULE DE BREVET EUROPEEN

(11) **EP 3 840 974 B1**
(45) Date de publication et mention de la délivrance du brevet: **11.05.2022**
(21) Numéro de dépôt: 19758793.4
(22) Date de dépôt: 15.07.2019
(51) Int. Cl.: B60K 20/04, B60K 20/08, F16H 57/00, F16H 59/02

(54) **MODULE DESTINE A ETRE ASSEMBLE DANS UN HABITACLE D'UN VEHICULE AUTOMOBILE**
MODUL, VORGESEHEN ZUM ZUSAMMENBAU IN EINEM INNENRAUM EINES KRAFTFAHRZEUGS
MODULE CONFIGURED TO BE ASSEMBLED IN A PASSENGER COMPARTMENT OF A MOTOR VEHICLE

(30) Priorité: 20.08.2018 FR 1857538
(43) Date de publication de la demande: 30.06.2021
(73) Titulaire: PSA Automobiles SA, 78300 Poissy (FR)
(72) Inventeur: POIRRIER, Pascal, 70290 CHAMPAGNEY (FR); SAILLARD, Laurent, 90400 DANJOUTIN (FR)
(86) Numéro de dépôt international: PCT/FR2019/051763
(87) Numéro de publication internationale: WO 2020/039133

(56) Documents cités:
- EP-A1- 3 124 833
- WO-A1-2016/062935
- CN-A- 102 072 313

## Description

La présente invention concerne un ensemble qui forme un module qui est destiné à être assemblé dans un habitacle d'un véhicule automobile.

La présente invention concerne principalement un tel ensemble qui comporte un boitier de commande et un levier de commande qui sont adaptés pour commander une boîte de vitesses. Le levier est solidarisé au boitier de commande et comporte un sélecteur de marche arrière et un câble qui relie le sélecteur au boitier de commande. L'ensemble comporte aussi un dispositif de pré-maintien solidarisé au boitier de commande et adapté pour maintenir temporairement en position le levier de commande sur le boitier de commande. Le dispositif de pré-maintien est adapté pour être retiré une fois que le boitier de commande, le levier et le câble sont solidarisés dans un véhicule.

Il est connu de l'état de la technique d'avoir un tel ensemble qui forme un module et qui est assemblé par un opérateur dans un habitacle d'un véhicule automobile. Généralement le câble est libre et se positionne latéralement au levier de commande, pouvant gêner le travail des opérateurs. Or, si l'opérateur tire par inadvertance sur le câble, celui-ci ne sera plus correctement positionné, rendant très difficile, voire impossible, son raccordement aux autres câbles de commande de la boîte de vitesses dans le véhicule. Le fait de modifier le positionnement du câble peut aussi créer des frottements une fois un soufflet du levier de commande de positionné, générant des bruits parasites dans l'habitacle. Une bague qui bloque temporairement le câble, permet de ne résoudre qu'en partie ce problème, car elle demande des opérations supplémentaires pour être retirée et peut poser des problèmes en cas d'oubli et de non retrait.

Des autres ensembles comportant un boitier de commande et un levier de commande sont connus des documents WO 2016/062935 A1, EP 3 124 833 A1 et CN 102 072 313 A.

La présente invention a pour objectif de pallier ces problèmes et de proposer un véhicule qui comporte un tel ensemble avec un câble dont le positionnement est assuré pendant l'assemblage sur le véhicule, sans risquer de gêner l'opérateur et sans rajouter d'opérations supplémentaires.

Plus particulièrement, l'invention a pour objet un ensemble qui comporte un boitier de commande et un levier de commande, le boitier et le levier étant adaptés pour commander une boîte de vitesses. Le levier est solidarisé au boitier de commande et comporte un sélecteur de marche arrière. L'ensemble comporte aussi un câble qui relie le sélecteur au boitier de commande et un dispositif de pré-maintien solidarisé au boitier de commande et adapté pour maintenir temporairement en position le levier de commande sur le boitier de commande, le dispositif de pré-maintien étant adapté pour être retiré une fois que le boitier de commande, le levier et le câble sont solidarisés dans le véhicule, tel le dispositif de pré-maintien comporte des moyens de retenus adaptés pour maintenir temporairement en position le câble avant la mise en position de l'ensemble sur le véhicule et pour libérer le câble lorsque le dispositif de pré-maintien est désolidarisé du boitier de commande.

Selon une première caractéristique de l'invention, les moyens de retenu peuvent être formés par une encoche adaptée pour y loger le câble. L'encoche peut être généralement débouchante au niveau de la surface de contact entre le dispositif de pré-maintien et le boitier de commande. Plus particulièrement, l'encoche peut être débouchante en dessous du dispositif de pré-maintien, libérant le câble lorsque le dispositif de pré-maintien est retiré du boitier de commande.

Selon une seconde caractéristique de l'invention, l'encoche peut comporter une partie souple telle qu'une partie en caoutchouc, en appui contre le câble. Une telle partie souple permet de bloquer en translation le câble dans l'encoche lors de la mise en position de l'ensemble dans le véhicule. Une telle partie souple peut être positionnée dans une rainure formée le long de la paroi interne de l'encoche du dispositif de pré-maintien ou être collée le long de ladite paroi interne de l'encoche.

La présente invention concerne aussi un dispositif de pré-maintien adapté pour être temporairement assemblé à un boitier de commande et à un levier de commande pour former un ensemble comportant au moins l'une des caractéristiques précédentes.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :

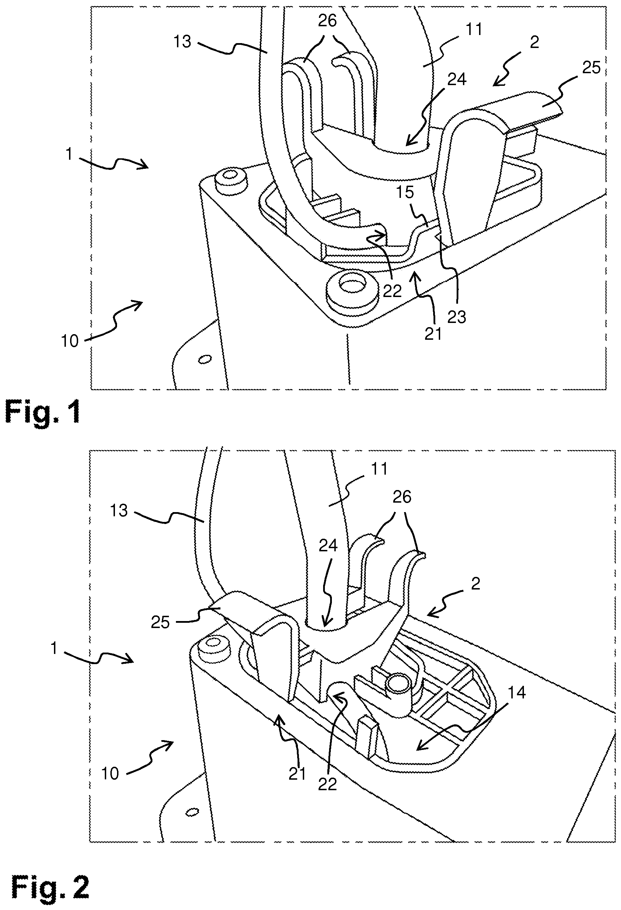

- Les figures 1 et 2 représentent des vues partielles d'un ensemble selon l'invention qui comporte un boitier de commande, un levier de commande et un dispositif de pré-maintien du levier au boitier de commande.

Dans la description détaillée de l'invention est utilisé un référentiel lié au sens normal de circulation d'un véhicule. Le terme avant désigne un positionnement vers l'avant du véhicule et le terme arrière désigne un positionnement vers l'arrière du véhicule. L'axe longitudinal correspond à l'axe normal de circulation du véhicule et l'axe transversal à un axe perpendiculaire à l'axe longitudinal compris dans le plan de déplacement du véhicule.

Les figures 1 et 2 représentent des vues partielles d'un ensemble 1 qui comporte un boitier de commande 10, un levier de commande 11 et un dispositif de pré-maintien 2 du levier de commande 11 au boitier de commande 10. Un tel ensemble 1 est destiné à être assemblé dans un véhicule pour former une commande de boîte de vitesses. Une fois assemblée dans le véhicule, le dispositif de pré-maintien 2 est retiré, libérant le levier de commande 11 qui avait été préalablement solidarisé aux câbles de commande de la boîte de vitesses. Le levier de commande 11 comporte un sélecteur de marche arrière et un câble de déblocage 13 de la marche arrière qui est solidarisé au levier de commande 11. Le câble de déblocage 13 de la marche arrière est positionné le long du levier de commande 11 jusqu'à une ouverture 14 formée dans le boitier de commande 10 pour être aussi assemblé aux câbles de commande de la boîte de vitesses. Selon l'invention, le dispositif de pré-maintien 2 est adapté pour maintenir temporairement en position le câble de déblocage 13 jusqu'à l'assemblage de l'ensemble 1 sur le véhicule. Ainsi, le câble de déblocage 13 reste toujours dans un positionnement optimal pour ne pas gêner le travail des opérateurs lors de l'assemblage de l'ensemble dans le véhicule. Un tel maintien en position du câble de déblocage 13 permet aussi d'assurer un bon positionnement de son extrémité destinée à être reliée aux câbles de commande de la boîte de vitesses. Lors du retrait du dispositif de pré-maintien 2, le câble de déblocage 13 est, en même temps que le levier de commande 11, automatiquement libérer, sans perturber le travail de l'opérateur. Un tel maintien temporaire câble de déblocage 13 est transparent pour l'opérateur car l'assemblage initial de l'ensemble 1 est généralement réalisé chez le fournisseur et livré prêt à être assemblé en usine finale d'assemblage. Le dispositif de pré-maintien 2 comporte des moyens de retenu 21 du câble de déblocage 13 qui sont formés par une encoche 22 adaptée pour y loger le câble de déblocage 13. L'encoche 22 est débouchante au niveau de la surface de contact entre le dispositif de pré-maintien 2 et le boitier de commande 10. L'encoche 22 est débouchante en dessous du dispositif de pré-maintien 2, libérant le câble de déblocage 13 lorsque le dispositif de pré-maintien 2 est retiré du boitier de commande 10. Une telle encoche 22 présente un diamètre adapté pour bloquer en translation le câble de déblocage 13, évitant que l'opérateur ne tire par accident sur le câble de déblocage 13, faisant sortir son extrémité libre de l'ouverture 14 du boitier de commande 10, compliquant son assemblage avec les câbles de commande de la boîte de vitesses. Le diamètre de l'encoche 22 doit être adapté pour ne pas trop serrer le câble de déblocage 13, risquant de l'endommager et/ou risquant que le câble de déblocage 13 ne reste accroché au dispositif de pré-maintien 2 lors de son retrait du boitier de commande 10. Un insert en caoutchouc peut être inséré dans l'encoche 22 pour bloquer en translation le câble de déblocage 13, sans risquer de l'endommager. Le dispositif de pré-maintien 2 comporte, du côté de l'encoche 22, un crochet 23 qui est solidarisé à une patte adaptée 15 du boitier de commande 10. Le dispositif de pré-maintien 2 comporte une ouverture cylindrique 24 dans laquelle est positionnée le levier de commande 11. L'ouverture cylindrique 24 permet de maintenir temporairement en position le levier de commande 11 par rapport au boitier de commande 10. L'ouverture cylindrique 24 est ouverte du côté opposé du crochet 23 pour permettre le passage du levier de commande 11 lors du retrait du dispositif de pré-maintien 2 du boitier de commande 10. Une première patte d'appui 25 et un ensemble 26 de deux secondes pattes du dispositif de pré-maintien 2 facilitent l'extraction du levier de commande 11 ; la première patte 25 permet de facilité le retrait du crochet 23 et les deux pattes secondaires 26 sont positionnées de part et d'autre de la partie ouverte de l'ouverture cylindrique 24, facilitant l'écartement de ladite partie ouverte pour permettre le passage du levier de commande 11.

Il va de soi que la présente invention n'est pas limitée aux modes de réalisation qui viennent d'être décrits et que diverses modifications et variantes simples peuvent être envisagées par l'homme du métier sans sortir du cadre de l'invention tel que défini par les revendications annexées, notamment sur le positionnement de l'encoche 22 du dispositif de pré-maintien 2 qui peut aussi bien être formée à différents endroits du dispositif de pré-maintien 2, mais toujours débouchante au niveau de la surface de contact entre le dispositif de pré-maintien 2 et le boitier de commande 10. De même le mode de fixation entre le dispositif de pré-maintien 2 et le boitier de commande 10 peut être modifié sans sortir du cadre de l'invention.

## Revendications

1. Ensemble (1) comportant un boitier de commande (10) et un levier de commande (11), adaptés pour commander une boîte de vitesses, ledit levier (11) étant solidarisé au boitier de commande (10) et comporte un sélecteur de marche arrière, ledit ensemble (1) comporte aussi un câble (13) qui relie le sélecteur au boitier de commande (10) et un dispositif de pré-maintien (2) solidarisé au boitier de commande (10) et adapté pour maintenir temporairement en position le levier de commande (11) sur le boitier de commande (10), ledit dispositif de pré-maintien (2) étant adapté pour être retiré une fois que le boitier de commande (10), le levier (11) et le câble (13) sont solidarisés dans un véhicule, **caractérisé en ce que** le dispositif de pré-maintien (2) comporte des moyens de retenus (22) adaptés pour maintenir temporairement en position le câble (13) avant la mise en position de l'ensemble (1) sur le véhicule et pour libérer ledit câble (13) lorsque le dispositif de pré-maintien (2) est désolidarisé du boitier de commande (10).

2. Ensemble (1) selon la revendication 1, **caractérisé en ce que** les moyens de retenu (22) sont formés par une encoche adaptée pour y loger le câble (13).

3. Ensemble (1) selon la revendication 2, **caractérisé en ce que** l'encoche (22) est débouchante au niveau de la surface de contact entre le dispositif de pré-maintien (2) et le boitier de commande (10).

4. Ensemble (1) selon la revendication 2 ou 3, **caractérisé en ce que** l'encoche (22) est débouchante en dessous du dispositif de pré-maintien (2), libérant le câble (23) lorsque le dispositif de pré-maintien (2) est retiré du boitier de commande (10).

5. Ensemble selon l'une quelconque des revendications 2 à 4, **caractérisé en ce que** l'encoche (22) comporte une partie souple telle qu'une partie en caoutchouc, en appui contre le câble (23).

6. Ensemble (1) selon la revendication 5, **caractérisé en ce que** ladite partie souple est positionnée dans une rainure formée le long de la paroi interne de l'encoche (22) du dispositif de pré-maintien (2).

7. Ensemble (1) selon la revendication 5, **caractérisé en ce que** ladite partie souple est collée le long de la paroi interne de l'encoche (22) du dispositif de pré-maintien (2).

8. Dispositif de pré-maintien (2), adapté pour maintenir temporairement en position un levier de commande (11) sur un boitier de commande (10) et comportant des moyens de retenu (22) adaptés pour maintenir temporairement en position un câble (13), ledit câble (13) reliant un sélecteur de marche arrière du levier de commande (11) au boitier de commande (10), et pour libérer le câble (13) lorsque le dispositif de pré-maintien (2) est désolidarisé du boitier de commande (10), le dispositif de pré-maintien (2) étant adapté pour être retiré une fois que le boitier de commande (10), le levier (11) et le câble (13) sont solidarisés dans un véhicule et étant adapté pour être temporairement assemblé au boitier de commande (10) et au levier de commande (11) pour former un ensemble (1) selon l'une quelconque des revendications précédentes.

## Patentansprüche

1. Anordnung (1) mit einem Steuergehäuse (10) und einem Steuerhebel (11), die zur Steuerung eines Getriebes geeignet sind, wobei der Hebel (11) fest mit dem Steuergehäuse (10) verbunden ist und einen Rückwärtsgangwähler aufweist, wobei die Baugruppe (1) auch ein Kabel (13), das den Wählschalter mit dem Steuergehäuse (10) verbindet, und eine Vorhalteeinrichtung (2) aufweist, die fest mit dem Steuergehäuse (10) verbunden ist und geeignet ist, den Steuerhebel (11) vorübergehend auf dem Steuergehäuse (10) in Position zu halten, wobei die Vorhalteeinrichtung (2) geeignet ist zurückgezogen werden, sobald das Steuergehäuse (10), der Hebel (11) und das Seil (13) in einem Fahrzeug fest miteinander verbunden sind, **dadurch gekennzeichnet, dass** die Vorhaltevorrichtung (2) Haltemittel (22) umfasst, die geeignet sind, das Seil (13) vorübergehend in Position zu halten, bevor die Einheit (1) auf dem Fahrzeug in Position gebracht wird, und das Seil (13) freizugeben, wenn die Vorhaltevorrichtung (2) vom Steuergehäuse (10) gelöst wird.

2. Anordnung (1) nach Anspruch 1, **dadurch gekennzeichnet, dass** die Haltemittel (22) durch eine Kerbe gebildet sind, die geeignet ist, das Kabel (13) darin aufzunehmen.

3. Anordnung (1) nach Anspruch 2, **dadurch gekennzeichnet, dass** die Kerbe (22) an der Kontaktfläche zwischen der Vorhaltevorrichtung (2) und dem Steuergehäuse (10) mündet.

4. Anordnung (1) nach Anspruch 2 oder 3, **dadurch gekennzeichnet, dass** die Kerbe (22) unter der Vorhaltevorrichtung (2) mündet und das Kabel (13) freigibt, wenn die Vorhaltevorrichtung (2) aus dem Steuergehäuse (10) entfernt wird.

5. Anordnung nach einem der Ansprüche 2 bis 4, **dadurch gekennzeichnet, dass** die Aussparung (22) einen flexiblen Teil, wie einen Gummiteil, umfasst, der gegen das Kabel (13) anliegt.

6. Anordnung (1) nach Anspruch 5, **dadurch gekennzeichnet, dass** der flexible Abschnitt in einer Nut angeordnet ist, die entlang der Innenwand der Aussparung (22) der Vorhaltevorrichtung (2) ausgebildet ist.

7. Anordnung (1) nach Anspruch 5, **dadurch gekennzeichnet, dass** der flexible Teil entlang der Innenwand der Aussparung (22) der Vorhaltevorrichtung (2) verklebt ist.

8. Vorhaltevorrichtung (2), die zum zeitweiligen Halten eines Steuerhebels (11) auf einem Steuergehäuse (10) in Position ausgebildet ist und Haltemittel (22) aufweist, die zum zeitweiligen Halten eines Kabels (13) in Position ausgebildet sind, wobei das Kabel (13) einen Rückwärtsgangschalter des Steuerhebels (11) mit dem Steuergehäuse (10) verbindet und das Kabel (13) freigibt, wenn die Vorhaltevorrichtung (2) vom Steuergehäuse (10) gelöst ist, wobei die Vorhaltevorrichtung (2) zum Herausziehen angepasst ist, sobald das Steuergehäuse (10) entfernt ist 0), wobei der Hebel (11) et das Seil (13) dans einem Fahrzeug fest miteinander verbunden sind und angepasst sind, um vorübergehend mit dem Steuergehäuse (10) und dem Steuerhebel (11) verbunden zu werden, um eine Einheit (1) nach einem der vorhergehenden Ansprüche zu bilden.

## Claims

1. Assembly (1) comprising a control box (10) and a control lever (11) adapted to control a transmission, said lever (11) being secured to the control box (10) and comprising a reverse gear selector, said assembly (1) also comprises a cable (13) which connects the selector to the control box (10) and a pre-holding device (2) secured to the control box (10) and adapted to temporarily hold the control lever (11) in position on the control box (10), said pre-holding device (2) being adapted to hold the control box (10) be removed once the control box (10), the lever (11) and the cable (13) are secured in a vehicle, **characterized in that** the pre-holding device (2) comprises retaining means (22) adapted to temporarily hold the cable (13) in position before the assembly (1) is placed in position on the vehicle and to release said cable (13) when the pre-holding device (2) is detached from the control box (10).

2. Assembly (1) according to claim 1, **characterized in that** the retaining means (22) are formed by a notch adapted to house the cable (13) therein.

3. Assembly (1) according to claim 2, **characterized in that** the notch (22) is open at the contact surface between the pre-holding device (2) and the control housing (10).

4. Assembly (1) according to claim 2 or 3, **characterized in that** the notch (22) is open below the pre-holding device (2), releasing the cable (13) when the pre-holding device (2) is removed from the control housing (10).

5. Assembly according to any one of Claims 2 to 4, **characterized in that** the notch (22) comprises a flexible part such as a rubber part bearing against the cable (13).

6. Assembly (1) according to claim 5, **characterized in that** said flexible part is positioned in a groove formed along the inner wall of the notch (22) of the pre-holding device (2).

7. Assembly (1) according to claim 5, **characterized in that** said flexible part is glued along the inner wall of the notch (22) of the pre-holding device (2).

8. Pre-holding device (2), adapted to temporarily hold a control lever (11) in position on a control housing (10) and having holding means (22) adapted to temporarily hold a cable (13) in position, said cable (13) connecting a reverse selector of the control lever (11) to the control housing (10) and to release the cable (13) when the pre-holding device (2) is disengaged from the control housing (10), the pre-holding device (2) being adapted to be removed once the control housing (10) is removed ), the lever (11) and the cable (13) are secured in a vehicle and being adapted to be temporarily assembled to the control box (10) and the control lever (11) to form an assembly (1) according to any one of the preceding claims.
